# EUROPEAN PATENT APPLICATION

(11) **EP 4 563 798 A1**
(43) Date of publication of application: **04.06.2025**
(21) Application number: 24213670.3
(22) Date of filing: 18.11.2024
(51) Int. Cl.: F02C 6/08, F02C 9/18, F04D 27/02

(54) **GAS TURBINE ENGINE BLEED SYSTEMS INCLUDING BLEED DISCHARGE EXHAUST DEVICES**

(30) Priority: 01.12.2023 US 202363605309 P; 05.04.2024 US 202418628126
(71) Applicant: General Electric Company, Cincinnati, Ohio 45215 (US)
(72) Inventor: MILLER, Brandon, Evendale, 45241 (US); MATAVA, Stephen, Lynn, 01910 (US); GEERTSEMA, Egbert, Evendale, 45241 (US); GLESSNER, John, Evendale, 45241 (US); HOLLAND, John, Evendale, 45241 (US); JOHNSON, Steven Douglas, Evendale, 45241 (US); ROEHM, Ryan, Evendale, 45241 (US)
(74) Representative: Openshaw & Co.

(57) **Abstract**

Gas turbine engine bleed systems (204, 902) including bleed exhaust devices (200, 800, 904, 1100, 1200, 1300) are disclosed. An apparatus (200, 800, 904, 1100, 1200, 1300) to be coupled to a bifurcation (204, 902) disposed in a bypass flow path (148) of a gas turbine engine (110), the apparatus (200, 800, 904, 1100, 1200, 1300) comprising an inlet (406, 1002, 1110), an inlet manifold (502, 1006, 1111, 1304) fluidly coupled to the inlet (406, 1002, 1110), a first wall (402, 1014, 1102, 1316) including a hole and a second wall (404, 1016, 1106, 1318), the first wall (402, 1014, 1102, 1316) and the second wall (404, 1016, 1106, 1318) defining a chamber (506, 1012, 1114, 1314) therebetween, the chamber (506, 1012, 1114, 1314) fluidly coupled to the inlet manifold (502, 1006, 1111, 1304), the chamber (506, 1012, 1114, 1314) fluidly coupled to the bypass flow path via the hole.

## Description

### FIELD OF THE DISCLOSURE

This application claims priority to U.S. provisional patent app. no. 63/605,309, which was filed on December 1, 2023, and is entitled "GAS TURBINE ENGINE BLEED SYSTEMS INCLUDING BLEED DISCHARGE EXHAUST DEVICES," which is hereby incorporated by referenced in its entirety.

### FIELD OF THE DISCLOSURE

This disclosure relates generally to gas turbines and, more particularly, to gas turbine engine bleed systems including bleed discharge exhaust devices.

### BACKGROUND

Turbine engines are some of the most widely used power-generating technologies, often being utilized in aircraft and power-generation applications. A turbine engine generally includes a fan and a core arranged in flow communication with one another. The core of the turbine engine generally includes, in serial flow order, a compressor section, a combustion section, a turbine section on the same shaft as the compressor section, and an exhaust section. Typically, a casing or housing surrounds the core of the turbine engine.

### BRIEF DESCRIPTION OF THE DRAWINGS

A full and enabling disclosure of the preferred embodiments, including the best mode thereof, directed to one of ordinary skill in the art, is set forth in the specification, which makes reference to the appended Figures, in which:
FIG. 1 is a cross-sectional view of an example gas turbine engine in which examples disclosed herein may be implemented.
FIG. 2 is a perspective simplified view of the gas turbine engine of FIG. 1 including an example bifurcation and an example bleed exhaust device implemented in accordance with teachings of this disclosure.
FIG. 3 is a side view of the bleed exhaust device of FIG. 2 coupled to an example bleed system of the gas turbine engine of FIGS. 1 and 2.
FIG. 4A is a schematic top view of the example bifurcation of FIG. 2 and an example bleed exhaust device of FIG. 2.
FIG. 4B is a perspective view of the example bifurcation of FIG. 2 and an example bleed exhaust device of FIG. 2.
FIG. 5 is a perspective view of the bleed exhaust device of FIGS. 2-4.
FIG. 6 is a first cross-sectional perspective view of the bleed exhaust device of FIGS. 2-5.
FIG. 7A is a second cross-sectional perspective view of the bleed exhaust device of FIGS. 2-5.
FIG. 7B is a second cross-sectional perspective view of the bleed exhaust device of FIGS. 2-5.
FIG. 8 is a perspective view of the bleed exhaust device showing an example mounting hole configuration for coupling the bleed exhaust device to the gas turbine engine of FIGS. 1 and 2.
FIG. 9 is a perspective simplified view of the gas turbine engine of FIG. 1 including another example bifurcation and another example bleed exhaust device implemented in accordance with teachings of this disclosure.
FIG. 10 is a perspective view of the bleed exhaust device of FIG. 9 coupled to an example bleed system of the gas turbine engine of FIGS. 1 and 2.
FIG. 11 is a top cross-sectional perspective view of another example bleed exhaust device implemented in accordance with teachings of this disclosure.
FIG. 12 is a top cross-sectional perspective view of another example bleed exhaust device implemented in accordance with teachings of this disclosure.
FIG. 13 is a perspective simplified view of another example bleed exhaust device implemented in accordance with teachings of this disclosure.

In general, the same reference numbers will be used throughout the drawing(s) and accompanying written description to refer to the same or like parts. The figures are not necessarily to scale.

### DETAILED DESCRIPTION

Some gas turbine engines include operability bleed systems, which direct excess air from the cold section of the gas turbine engine (e.g., the high pressure compressor, the low pressure compressor, etc.) to another location, such as the bypass airflow passage, the ambient environment of the gas turbine engine, or an exhaust of the gas turbine engine. Prior operability bleed systems can have negative acoustic effects and/or can increase the required thickness and/or diameter of gas turbine engine casing components, which increases the weight of the gas turbine engine. Examples disclosed herein include operability bleed systems including exhaust devices that are incorporated into the trailing edges of engine bifurcations. Example exhaust devices disclosed herein exhaust operability bleed air at angles that are closer to parallel than prior operability bleed systems, which reduces the acoustic impact of the operability bleed systems disclosed herein. Example exhaust devices disclosed herein do not extend through and/or interrupt the structural hoop of the nacelle components, which reduces the weight impact of operability bleed systems compared to prior operability bleed systems. Example exhaust devices disclosed herein are incorporated into the lower bifurcation of gas turbine engines, which facilitates retrofitting such exhaust devices into gas turbine engines and/or the removal therefrom without significant redesigns of other engine configurations.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used in this disclosure, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In some examples used herein, the term "substantially" is used to describe a relationship between two parts that is within three degrees of the stated relationship (e.g., a substantially colinear relationship is within three degrees of being linear, a substantially perpendicular relationship is within three degrees of being perpendicular, a substantially parallel relationship is within three degrees of being parallel, a substantially flush relationship is within three degrees of being flush, etc.).

The terms "upstream" and "downstream" refer to the relative direction with respect to fluid flow in a fluid pathway. For example, "upstream" refers to the direction from which the fluid flows, and "downstream" refers to the direction to which the fluid flows. Various terms are used herein to describe the orientation of features. In general, the attached figures are annotated with reference to the axial direction, radial direction, and circumferential direction of the vehicle associated with the features, forces and moments. In general, the attached figures are annotated with a set of axes including the axial axis A, the circumferential axis C, and the radial axis R. In some examples disclosed herein, the orientation of features is described with reference to clock positions. In these examples, the clock positions are described in reference to the position of the features in a plane defined by the radial axis and circumferential axis, wherein the 6 o'clock position is oriented along the gravitational vector and the 12 o'clock position is disposed in an opposite direction as the gravitational vector.

During the operation of some gas turbine engines, a portion of the air flowing through the compressor can be extracted. This portion of extracted air from the compressor is referred to as "bleed air" or "bleed." The bleed air can be extracted via one or more bleed slots located between stages of a compressor of a gas turbine engine. Some of the bleed air can be used in other portions of the gas turbine engine and/or the associated aircraft. For example, bleed air can be used for cooling components of the turbine, pressurizing bearing sumps, purging portions of the gas turbine engine, and/or pressuring the cabin of the aircraft. In some gas turbine engines, during operation, the compressor can intake more air than is needed to operate the combustor and turbine. To maintain engine performance and/or operability, many such gas turbine engines can extract excess air from the compressor. As used herein, such extracted air is referred to herein as "operability bleed air" and systems to extract and exhaust operability bleed air are referred to herein as an "operability bleed systems."

Operability bleed systems remove excess air from the core section of a gas turbine engine. Some operability bleed systems can vent excess air into the bypass airflow passage, into the exhaust section of the gas turbine engine, and/or into the ambient atmosphere. Some prior operability bleed systems that exhaust operability bleed air into the ambient atmosphere extend radially through the gas turbine engine and interrupt the hoop structure of the nacelle, which can create weak points in the nacelle. To compensate for such weak points, prior gas turbine engines that include such prior operability bleed systems include strengthened nacelles, which can increase the weight of the aircraft. Additionally, the prior operability bleed systems can compromise the acoustic treatment of the nacelle, which can have negative acoustic effects. Some prior operability bleed systems exhaust operability bleed air into the bypass airflow passage. Some such prior operability bleed systems exhaust operability bleed air at a right angle relative to the air flowing through the bypass airflow passage, which has a negative acoustic effects on the gas turbine engine. Some prior operability bleed systems that exhaust operability bleed systems into the exhaust section of the gas turbine engine use comparatively large and heavy muffling devices to reduce generated noise. Additionally, such operability bleed systems extend from the compressor to the exhaust section, which can increase the size and weight of casing of the core section of the gas turbine engine.

Example operability bleed systems disclosed herein overcome the above-noted deficiencies and include exhaust devices incorporated into the trailing edge of a bifurcation of a gas turbine engine. Examples disclosed herein exhaust operability bleed air into the engine bypass at an acute angle (e.g., between 45 degrees and parallel to, etc.) relative to the engine center line, which reduces the noise associated with exhausting operability bleed air. Example operability bleed systems disclosed herein are lighter and offer more favorable acoustics than prior operability bleed systems.

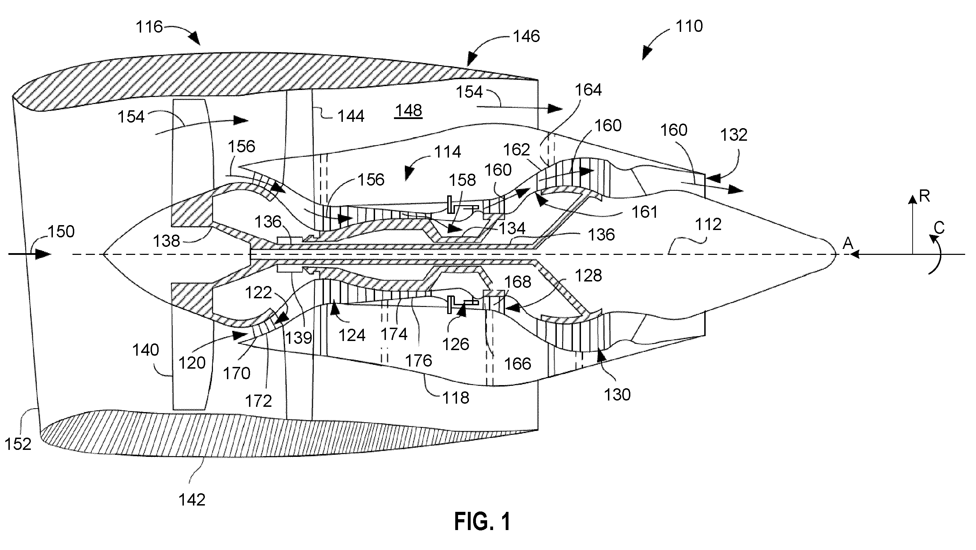

Referring now to the drawings, wherein identical numerals indicate the same elements throughout the figures, FIG. 1 is a schematic cross-sectional view of a high-bypass turbofan-type gas turbine engine 110 ("turbofan engine 110"). While the illustrated example is a high-bypass turbofan engine, the principles of the present disclosure are also applicable to other types of engines, such as low-bypass turbofans, turbojets, turboprops, etc. As shown in FIG. 1, the turbofan engine 110 defines a longitudinal or axial centerline axis 112 extending therethrough for reference. FIG. 1 also includes an annotated directional diagram with reference to an axial direction A, a radial axis R, and a circumferential axis C.

In general, the turbofan engine 110 includes a core turbine 114 disposed downstream from a fan section 116. The core turbine 114 includes a substantially tubular outer casing 118 that defines an annular inlet 120. The outer casing 118 can be formed from a single casing or multiple casings. The outer casing 118 encloses, in serial flow relationship, a compressor section having a booster or low-pressure compressor 122 ("LP compressor 122") and a high pressure compressor 124 ("HP compressor 124"), a combustion section 126, a turbine section having a high pressure turbine 128 ("HP turbine 128") and a low-pressure turbine 130 ("LP turbine 130"), and an exhaust section 132. A high pressure shaft or spool 134 ("HP shaft 134") drivingly couples the HP turbine 128 and the HP compressor 124. A low-pressure shaft or spool 136 ("LP shaft 136") drivingly couples the LP turbine 130 and the LP compressor 122. The LP shaft 136 can also couple to a fan spool or shaft 138 of the fan section 116. In some examples, the LP shaft 136 is coupled directly to the fan shaft 138 (e.g., a direct-drive configuration). In alternative configurations, the LP shaft 136 can couple to the fan shaft 138 via a reduction gear 139 (e.g., an indirect-drive or geared-drive configuration).

As shown in FIG. 1, the fan section 116 includes a plurality of fan blades 140 coupled to and extending radially outwardly from the fan shaft 138. An annular fan casing or nacelle 142 circumferentially encloses the fan section 116 and/or at least a portion of the core turbine 114. The nacelle 142 can be partially supported relative to the core turbine 114 by a plurality of circumferentially-spaced apart outlet guide vanes 144. Furthermore, a downstream section 146 of the nacelle 142 can enclose an outer portion of the core turbine 114 to define a bypass airflow passage 148 therebetween.

As illustrated in FIG. 1, air 150 enters an inlet portion 152 of the turbofan engine 110 during operation thereof. A first portion 154 of the air 150 flows into the bypass airflow passage 148, while a second portion 156 of the air 150 flows into the inlet 120 of the LP compressor 122. One or more sequential stages of LP compressor stator vanes 170 and LP compressor rotor blades 172 coupled to the LP shaft 136 progressively compress the second portion 156 of the air 150 flowing through the LP compressor 122 en route to the HP compressor 124. Next, one or more sequential stages of HP compressor stator vanes 174 and HP compressor rotor blades 176 coupled to the HP shaft 134 further compress the second portion 156 of the air 150 flowing through the HP compressor 124. This provides compressed air 158 to the combustion section 126 where it mixes with fuel and burns to provide combustion gases 160.

The combustion gases 160 flow through the HP turbine 128 where one or more sequential stages of HP turbine stator vanes 166 and HP turbine rotor blades 168 coupled to the HP shaft 134 extract a first portion of kinetic and/or thermal energy therefrom. This energy extraction supports operation of the HP compressor 124. The combustion gases 160 then flow through the LP turbine 130 where one or more sequential stages of LP turbine stator vanes 162 and LP turbine rotor blades 164 coupled to the LP shaft 136 extract a second portion of thermal and/or kinetic energy therefrom. This energy extraction causes the LP shaft 136 to rotate, thereby supporting operation of the LP compressor 122 and/or rotation of the fan shaft 138. The combustion gases 160 then exit the core turbine 114 through the exhaust section 132 thereof. A turbine frame 161 with a fairing assembly is located between the HP turbine 128 and the LP turbine 130. The turbine frame 161 acts as a supporting structure, connecting a high-pressure shaft's rear bearing with a turbine housing and forming an aerodynamic transition duct between the HP turbine 128 and the LP turbine 130. Fairings form a flow path between the high-pressure and low-pressure turbines and can be formed using metallic castings (e.g., nickel-based cast metallic alloys, etc.).

Along with the turbofan engine 110, the core turbine 114 serves a similar purpose and is exposed to a similar environment in land-based gas turbines, turbojet engines in which the ratio of the first portion 154 of the air 150 to the second portion 156 of the air 150 is less than that of a turbofan, and unducted fan engines in which the fan section 116 is devoid of the nacelle 142. In each of the turbofan, turbojet, and unducted engines, a speed reduction device (e.g., the reduction gear 139) can be included between any shafts and spools. For example, the reduction gear 139 is disposed between the LP shaft 136 and the fan shaft 138 of the fan section 116.

As described above with respect to FIG. 1, the turbine frame 161 is located between the HP turbine 128 and the LP turbine 130 to connect the high-pressure shaft's rear bearing with the turbine housing and form an aerodynamic transition duct between the HP turbine 128 and the LP turbine 130. As such, air flows through the turbine frame 161 between the HP turbine 128 and the LP turbine 130.

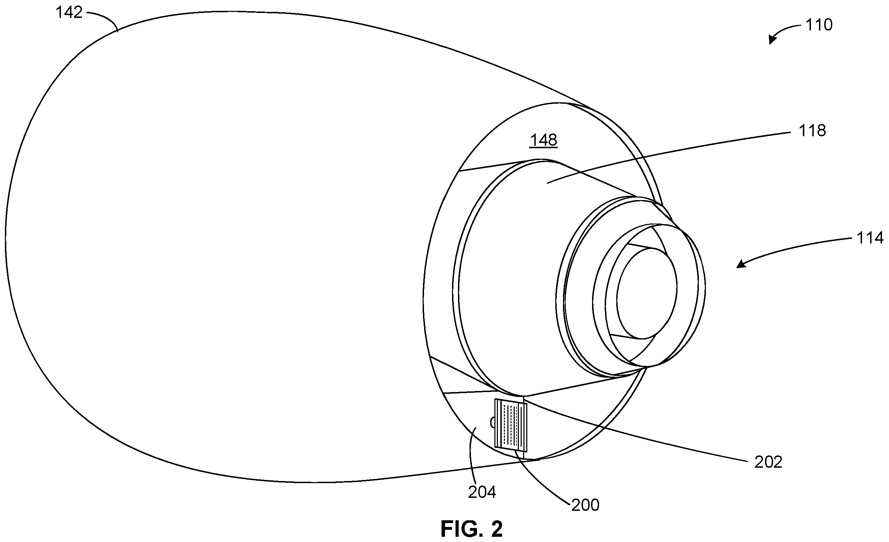

FIG. 2 is a perspective simplified view of the gas turbine engine 110 of FIG. 1 including an example bleed exhaust device 200 implemented in accordance with teachings of this disclosure. In the illustrated example of FIG. 2, the bleed exhaust device 200 is disposed within (e.g., coupled to, etc.) a trailing edge 202 of a bifurcation 204 of the gas turbine engine 110. In the illustrated example of FIG. 2 the bifurcation 204 extends between the nacelle 142 of FIG. 1 and the outer casing 118 of the core turbine 114 of FIG. 1. In the illustrated example of FIG. 2, the bifurcation 204 extends between the nacelle 142 and the core turbine 114 in the bypass airflow passage 148. In some examples, the nacelle 142 is a hinged nacelle that includes a joint (e.g., a hinge, etc.) disposed at the top of the nacelle 142 (e.g., disposed at the 12 o'clock position, etc.). In some such examples, the nacelle 142 can open about the hinge to enable access to the interior of nacelle (e.g., the bleed exhaust device 200, the bifurcation 204, etc.).

The bifurcation 204 is a structural component that supports the core turbine 114 within the nacelle 142 and the bypass airflow passage 148. In some examples, one or more conduits (e.g., air flow conduits, fuel conduits, electric conduits, etc.) can extend through bifurcation to enable communication between the core turbine 114 and the nacelle 142. In the illustrated example of FIG. 2, the bifurcation 204 is disposed generally at the 6 o'clock position (e.g., the bifurcation 204 is a lower bifurcation, etc.). In other examples, the bifurcation 204 can be an upper bifurcation (e.g., disposed at the 12 o'clock position, etc.) and/or another suitable location (e.g., the 9 o'clock position, the 3 o'clock position, etc.). In some examples, the gas turbine engine 110 can include any suitable number of bifurcations (e.g., two bifurcations, three bifurcations, etc.).

In the illustrated example of FIG. 2, the bleed exhaust device 200 is disposed in the trailing edge 202 of the bifurcation 204 (e.g., the trailing edge 202 is the bifurcation trailing edge, etc.). The bleed exhaust device 200 receives operability bleed air from the gas turbine engine 110 and directs (e.g., exhausts, expels, outputs, etc.) the operability bleed air into the bypass airflow passage 148. After the operability bleed air is expelled from bleed the bleed exhaust device 200, the operability bleed air mixes with the air flow flowing through the bypass airflow passage 148 (e.g., the "free stream" or the first portion 154 of the air of FIG. 1, etc.). The mixed flow including the air from the fan section 116 and the operability bleed air subsequently exits the gas turbine engine 110 via the bypass airflow passage 148.

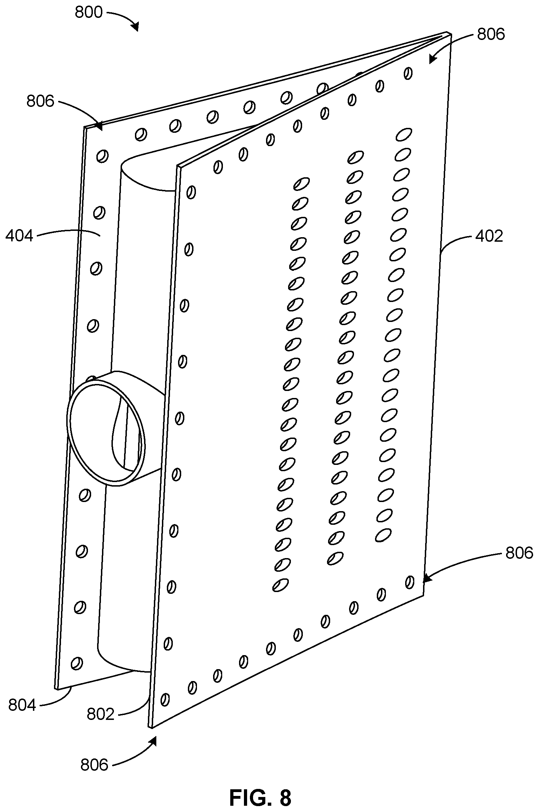

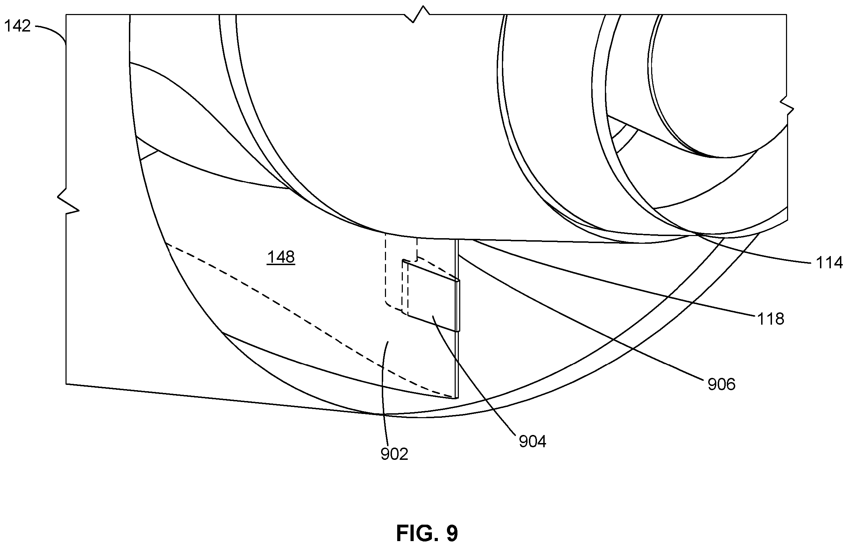

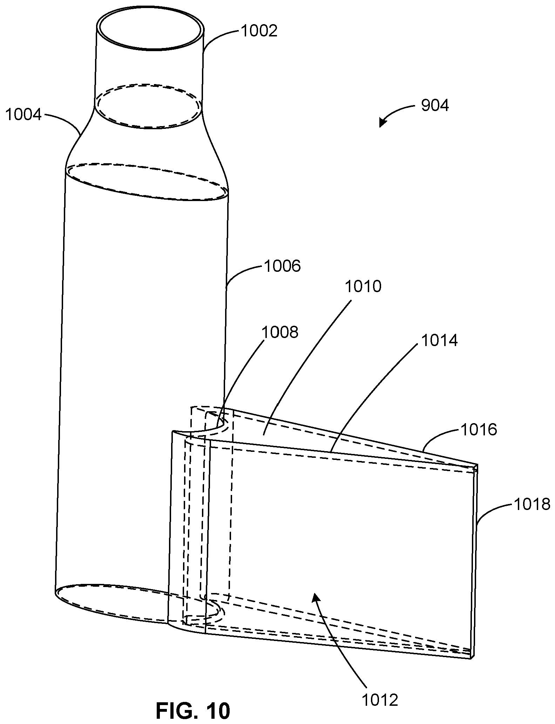

The bleed exhaust device 200 extends along a portion of the trailing edge 202 of the bifurcation 204. In the illustrated example of FIG. 2, the bleed exhaust device 200 extends along approximately 75% of the trailing edge 202 of the bifurcation 204. In other examples, the bleed exhaust device 200 can extend along an entirety of the trailing edge 202 (e.g., 100% of the trailing edge 202, etc.). In other examples, the bleed exhaust device 200 can extend along any other suitable length (e.g., 50% of the trailing edge 202, 75% of the trailing edge 202, etc.). The bleed exhaust device 200 is described below in additional detail in conjunction with FIGS. 2-7B. An example configuration for coupling the bleed exhaust device 200 to the bifurcation 204 is described below in conjunction with FIG. 8. An example bleed exhaust device 200 that extends along a smaller portion of the trailing edge 202 is described below in conjunction with FIGS. 9 and 10.

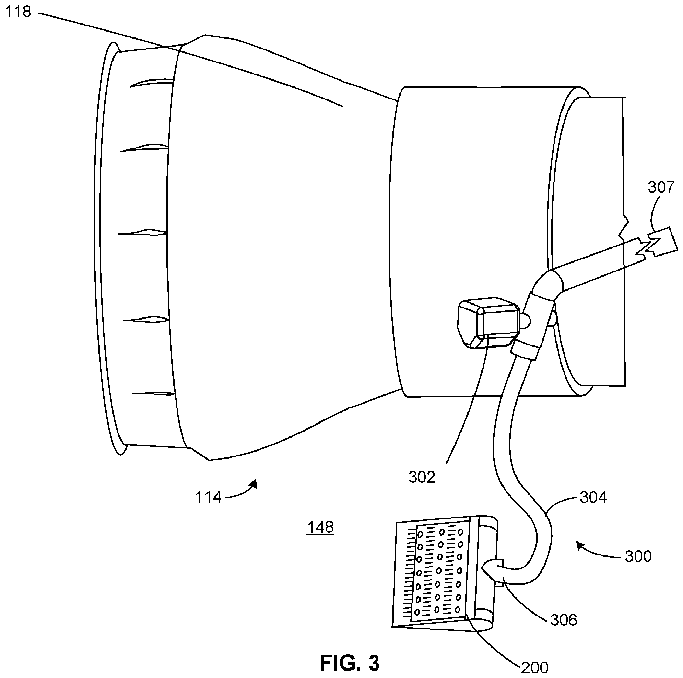

FIG. 3 is a side view of the bleed exhaust device 200 of FIG. 2 coupled to an example operability bleed system 300 of the gas turbine engine 110 of FIGS. 1 and 2. In the illustrated example of FIG. 3, the operability bleed system 300 includes a valve 302 and a bleed flow conduit 304. In the illustrated example of FIG. 3, the bleed flow conduit 304 extends from a position adjacent to the outer casing 118 of the core turbine 114, through the bifurcation 204 of FIG. 2, to a position adjacent to the bleed exhaust device 200, which is within the bypass airflow passage 148. In the illustrated example of FIG. 3, the bleed flow conduit 304 includes a first end 306 coupled to the bleed exhaust device 200 and a second end 307 (upstream along the bleed flow conduit 304), which can be coupled to a bleed slot (not illustrated) of the compressor of the gas turbine engine 110 (e.g., the HP compressor 124 of FIG. 1, etc.). That is, the second end 307 can be coupled to an operability compressor bleed. Due to the temperature of operability bleed air, the bleed flow conduit 304 and/or the body of the valve 302 can be composed of any suitable temperature resistance light weight material, such as aluminum, titanium, steel, a nickel alloy, etc.).

During some operating conditions of the gas turbine, air from the compressor of the gas turbine engine 110 (e.g., the HP compressor 124 of FIG. 1, etc.) can be routed through the operability bleed system 300. For example, the operability bleed air can enter the bleed flow conduit 304 when the compressor includes a greater volume of air than can be received by the combustor and/or turbine. The flow of operability bleed air is regulated (e.g., controlled, etc.) via the operation of a flow control member of the valve 302. For example, when the flow control member of the valve 302 is in an open position (e.g., the valve 302 is open, etc.), operability bleed air can flow through the bleed flow conduit 304. Similarly, when the flow control member of the valve 302 is in a closed position (e.g., the valve 302 is closed, etc.), operability bleed air is inhibited from flowing through the bleed flow conduit 304. In some examples, the valve 302 can have multiple open positions (e.g., a fully open position, a partially open position, etc.), which can used to regulate a flow rate of operability bleed air through the bleed flow conduit 304 (e.g., a mass flow rate, a volume flow rate, etc.). The valve 302 can be implemented by any suitable type of flow control valve, such as a gate valve, a globe valve, a butterfly valve, a needle valve, a plug valve, etc.

In some examples, the position of the flow control member of the valve 302 can be regulated by programmable circuitry associated with the gas turbine engine 110 (e.g., bleed control circuitry, etc.). In some such examples, the programmable circuitry can control the position of the flow control member of the valve 302 based on sensor data associated with the condition of the turbomachinery of the gas turbine engine 110 (e.g., a condition of the compressor, a condition of the turbine, a condition of the combustor, etc.), the ambient conditions of the gas turbine engine 110 (e.g., an ambient pressure, an ambient temperature, an ambient windspeed, etc.), and/or a flight condition of an aircraft associated with the gas turbine engine 110 (e.g., an airspeed, an angle of attack, etc.).

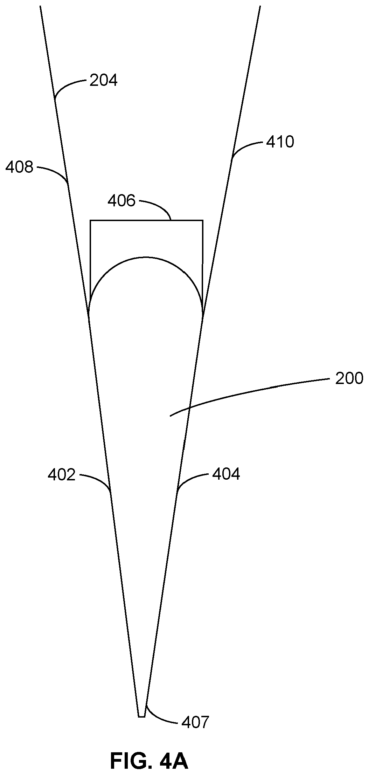

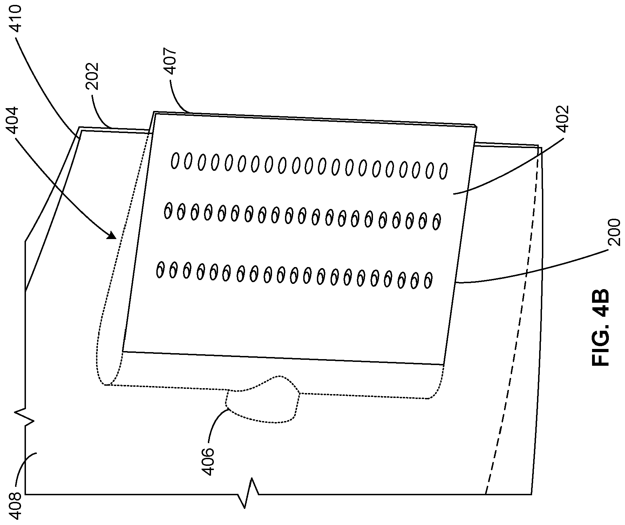

FIGS. 4A and 4B are a schematic top view and a perspective view of the example bifurcation 204 of FIG. 2 and the example bleed exhaust device 200 of FIG. 2. In the illustrated example of FIGS. 4A and 4B, the bleed exhaust device 200 is disposed within (e.g., incorporated with, etc.) the bifurcation 204. In the illustrated example of FIG. 4A, the bleed exhaust device 200 includes a first outer wall 402, a second outer wall 404, and an inlet 406. In the illustrated example of FIGS. 4A and 4B, the outer walls 402, 404 converge to a device trailing edge 407.

In the illustrated example of FIG. 4A, the bifurcation 204 includes a first bifurcation wall 408 and a second bifurcation wall 410. In the illustrated example of FIGS. 4A and 4B, the bifurcation walls 408, 410 converge to the trailing edge 202 of FIG. 2. In some examples, if the nacelle 142 (FIGS. 1 and 2) is a hinged nacelle, the bifurcation walls 408, 410 can be integrally and/or rigidly coupled to the moveable parts of the nacelle 142 (e.g., the bifurcation walls 408, 410 are displaced when the nacelle 142 is opened, etc.). In some such examples, the first bifurcation wall 408 can be coupled to the second bifurcation wall 410 via one or more fasteners to form the exterior of the bifurcation 204. In some such examples, the bleed exhaust device 200 can be retained within the bifurcation 204 via the coupling of the bifurcation walls 408, 410 (e.g., the bleed exhaust device 200 is clamped between the bifurcation walls 408, 410, etc.). Additionally or alternatively, the bleed exhaust device 200 can be coupled to the bifurcation 204 in any others suitable manner.

The inlet 406 of the bleed exhaust device 200 can be coupled to the first end of the bleed flow conduit 304 of FIG. 3. In the illustrated example of FIGS. 4A and 4B, the outer walls 402, 404 are substantially flush with the bifurcation walls 408, 410, respectively. The outer walls 402, 404 are exposed to the flow of air through the bypass (e.g., the bypass airflow passage 148, etc.). In other examples, the bifurcation walls 408, 410 are not flush with the bifurcation walls 408, 410 and extend over (e.g., partially over, fully over, etc.) the outer walls 402, 404. In some such examples, the bifurcation walls 408, 410 can include one or more holes to facilitate the flow of operability bleed air from the bleed exhaust device 200. In the illustrated example of FIG. 4B, the device trailing edge 407 of the bleed exhaust device 200 extends axially downstream of the trailing edge 202 of the bifurcation 204. In other examples, the trailing edge 202 and the device trailing edge 407 can be axially aligned (e.g., flush, etc.) and/or the device trailing edge 407 can be axially upstream of the trailing edge 202.

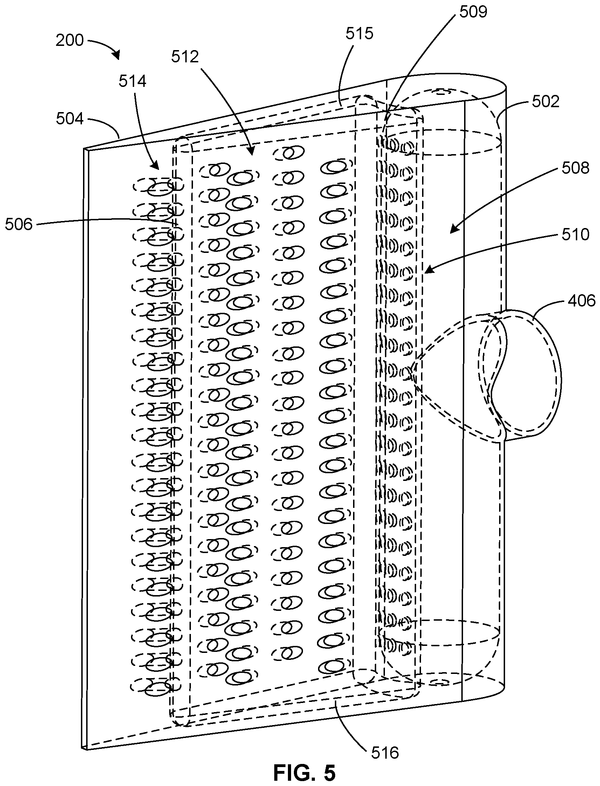

FIG. 5 is a perspective view of the bleed exhaust device 200 of FIGS. 2-4. In the illustrated example of FIG. 5, the bleed exhaust device 200 includes an inlet manifold 502 and a body 504, which includes an interior chamber 506. In the illustrated example of FIG. 5, the inlet manifold 502 includes a manifold chamber 508, an interior wall 509, manifold holes 510, and the inlet 406 of FIG. 4. In the illustrated example of FIG. 5, the body 504 includes the first outer wall 402 of FIG. 4 and the second outer wall 404 of FIG. 4 that include first body holes 512 and second body holes 514, respectively. As used herein, the terms "holes" and "openings" are used interchangeably.

In the illustrated example of FIG. 5, the bleed exhaust device 200 is shaped like an airfoil (e.g., an extended teardrop, etc.). In the illustrated example of FIG. 5, the bleed exhaust device 200 is symmetrical about radial-axial plane. The bleed exhaust device 200 can be composed of any suitable lightweight material that is capable of withstanding the comparatively high temperature and pressure within the bypass airflow passage 148 (FIGS. 1 and 2) and/or the operability bleed air. For example, the bleed exhaust device 200 can be composed of a metal (e.g., a nickel alloy, a titanium alloy, aluminum, an aluminum alloy, aerospace-grade steel, etc.), a composite, and/or a high-strength plastic. In other examples, the bleed exhaust device 200 can be composed of any other suitable material (e.g., cast iron, steel, copper, plastic, etc.). In the illustrated example of FIG. 5, the bleed exhaust device 200 is a single integral component. In some such examples, the bleed exhaust device 200 can be manufactured via machining, casting, and/or additive manufacturing, etc.). In other examples, the bleed exhaust device 200 can be composed of multiple discrete components, which can be manufactured via any suitable manufacturing method(s).

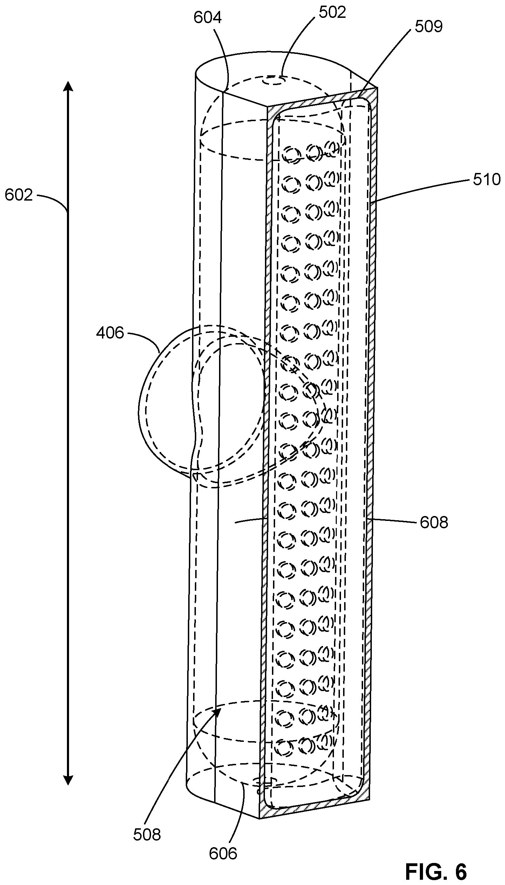

In the illustrated example of FIG. 5, the interior wall 509 divides the interior chamber 506 and the manifold chamber 508. The manifold holes 510 are formed in the interior wall 509 and enable the flow of operability bleed air from the manifold chamber 508 into the interior chamber 506. In some examples, the manifold holes 510 are primary exhaust holes. The arrangement of the manifold holes 510 are described below in additional detail in conjunction with FIG. 6.

The interior chamber 506 is a cavity (e.g., a hole, an empty space, a hollow volume, etc.) formed within the body 504. In the illustrated example of FIG. 5, the interior chamber 506 is defined by the interior wall 509, the outer walls 402, 404, a top surface 515, and a bottom surface 516 and has a shape that corresponds thereto. That is, the interior chamber 506 is a prism (e.g., the top surface 515 and the bottom surface 516 are parallel, etc.). In the illustrated example of FIG. 5 the surfaces 515, 516 of the interior chamber 506 are generally triangular, with a curved side adjacent to the inlet manifold 502. In other examples, the top surface 515 and the bottom surface 516 can have any other suitable shape (e.g., the interior chamber 506 can have any other suitable shape such as a cylinder, a cone, another prism, etc.). In the illustrated example of FIG. 5, the interior chamber 506 extends along the radial length of the bleed exhaust device 200. In other examples, the interior chamber 506 can have any other shape and size depending on the shape and size of the body 504.

The body holes 512, 514 are the outlet holes of the bleed exhaust device 200 (e.g., each of the body holes 512, 514 is an outlet/outlet hole of the bleed exhaust device 200, etc.). In the illustrated example of FIG. 5, the body holes 512, 514 extend through the outer walls 402, 404 into the interior chamber 506. That is, the body holes 512, 514 are through holes that fluidly couple the exterior of the bleed exhaust device 200 to the interior chamber 506. In some examples, the body holes 512, 514 are secondary exhaust holes (also referred to herein as openings). In some examples, at least a portion of the first body holes 512 and/or the second body holes 514 are absent. In some such examples, operability bleed air can leave the bleed exhaust device 200 via the non-absent ones of the first body holes 512 or the second body holes 514.

During operation, operability bleed air flows from the gas turbine engine 110 (e.g., from a bleed slot of the HP compressor 124 of FIG. 1, etc.), through the bleed flow conduit 304 of FIG. 3, and into the bleed exhaust device 200 via the inlet 406. After entering the bleed exhaust device 200 via the inlet 406, the operability bleed air enters the manifold chamber 508 and is distributed therethrough via the back pressure of the gas turbine engine 110. Operability bleed air flows out of the manifold chamber 508 via the manifold holes 510. After entering the interior chamber 506 via the manifold holes 510, the operability bleed air is distributed throughout the interior chamber 506 via the back pressure of the gas turbine engine 110. The operability bleed air flows out of the interior chamber 506 via the body holes 512, 514 and mixes with the air (e.g. first portion 154 of air 150 of FIG. 1) flowing through the bypass airflow passage 148. In some examples, the flow of air through the chambers 506, 508, and the body holes 512, 514 acoustically quiets (e.g., muffles, etc.), the sound pressure associated with the flow of the operability bleed air. For example, the loudness of the operability bleed air can be quieted (e.g., muffled, dampened, etc.) via absorptive silencing into the structure of the bleed exhaust device 200, via resistive silencing associated with the resistance (e.g., the impedance, etc.) associated with the holes 510, 512, 514, and/or shell damping via the chambers 506, 508. In some such examples, the bleed exhaust device 200 is a muffler (e.g., a muffling device, etc.).

FIG. 6 is a first cross-sectional perspective view of the bleed exhaust device 200 of FIGS. 2-5 depicting the inlet manifold 502 of FIG. 5. In the illustrated example of FIG. 5, the inlet manifold 502 includes the manifold chamber 508 of FIG. 5, the interior wall 509 of FIG. 5, and the manifold holes 510 of FIG. 5. In the illustrated example of FIG. 6, the inlet manifold 502 has a radial length 602. In the illustrated example of FIG. 6, the manifold chamber 508 includes a top surface 604 and a bottom surface 606. In the illustrated example of FIG. 6, the inlet manifold includes an interior surface 608 including the interior wall 509.

In the illustrated example of FIG. 6, the inlet 406 is disposed at a center of the radial length 602, such that operability bleed air enters the inlet manifold 502 at a center of the inlet manifold 502. In other examples, the inlet 406 can be disposed at any other suitable location along the radial length 602 of the inlet manifold 502. In the illustrated example of FIG. 6, the manifold chamber 508 is generally pill-shaped (e.g., shaped like a revolved stadium, shaped like a revolved disco-rectangle, etc.). That is, in the illustrated example of FIG. 6, the top surface 604 and the bottom surface 606 are generally dome-shaped and the interior surface 608 is generally cylindrical. In other examples, the manifold chamber 508 can have any other suitable shape (e.g., cylindrical, prism-shaped, conical, etc.), which can be determined empirically, analytically, and/or via modeling to increase the acoustic quieting/dampening associated with the inlet manifold 502 and/or based on the location of the inlet 406 relative to the inlet manifold 502.

In the illustrated example of FIG. 6, the manifold holes 510 are distributed along the radial length 602 of the inlet manifold 502 in three columns. In other examples, the manifold holes 510 can have any other suitable arrangement (e.g., one column, two columns, four columns, not arranged in columns, etc.). In the illustrated example of FIG. 6, each of the manifold holes 510 has a uniform size and shape (e.g., circular, etc.). In other examples, the manifold holes 510 can have non-uniform size(s) and/or shape(s). In some examples, the arrangement, size, and shapes of the manifold holes 510 can be determined empirically, analytically, and/or via modeling to increase the acoustic dampening/quieting of the operability bleed air entering the bleed exhaust device 200. In some examples, the manifold holes 510 and the interior wall 509 are absent. In some such examples, operability bleed air can directly flow from the inlet 406 into the interior chamber 506 (not illustrated in FIG. 6) or directly flow from the inlet 406 into the bypass airflow passage 148 (FIGS. 1 and 2).

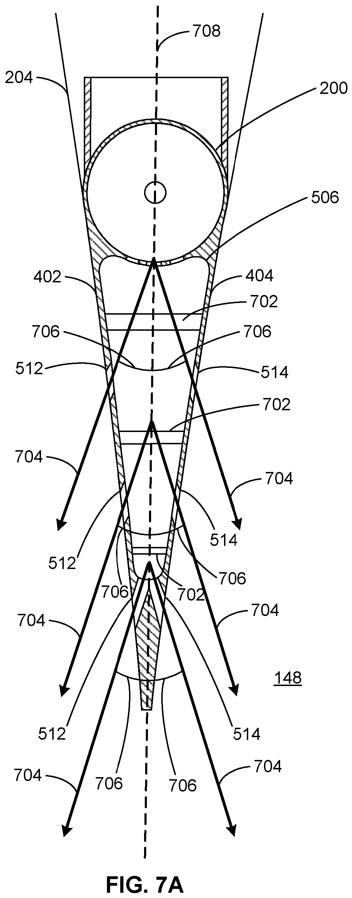

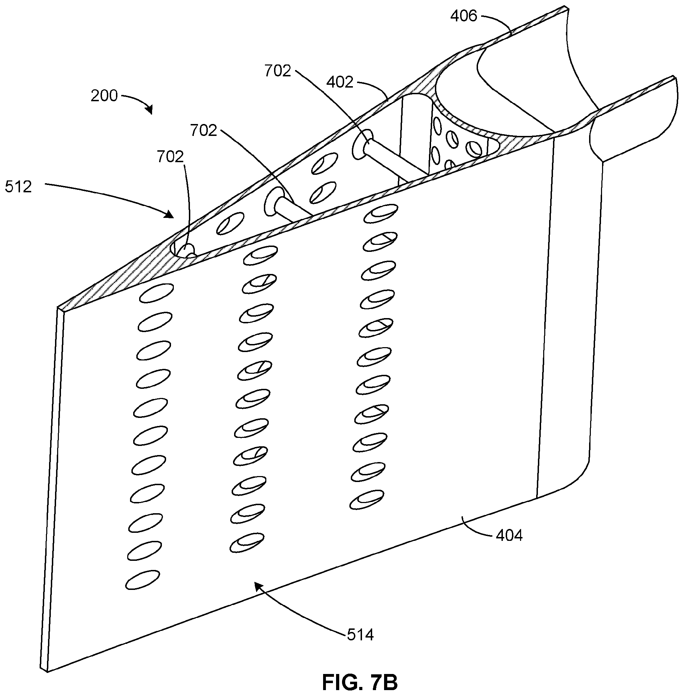

FIGS. 7A and 7B are a top cross-sectional view and a perspective cross-sectional view of the bleed exhaust device 200 of FIGS. 2-5, which depict the inside of the interior chamber 506. In the illustrated example of FIGS. 7A and 7B, the bleed exhaust device 200 includes example cross struts 702. The cross struts 702 are disposed within the interior chamber 506 and extend between the outer walls 402, 404. The cross struts 702 increase the burst strength of the bleed exhaust device 200 and the resistance of the bleed exhaust device 200 to comparatively high-pressure differentials between the interior chamber 506 and the bypass airflow passage 148 (FIGS. 1 and 2). In the illustrated example of FIGS. 7A and 7B, the bleed exhaust device 200 includes three columns of the cross struts 702, which extend along the radial length 602 (FIG. 6) of the bleed exhaust device 200. In other examples, the exhaust device can include any suitable number of cross struts 702 having any suitable configuration (e.g., one column, two columns, four columns, etc.). In other examples, the cross struts 702 can be absent.

In the illustrated example of FIG. 7A, outlet flow vectors 704 extend from the body holes 512, 514. The outlet flow vectors 704 depict example exit trajectories of the operability bleed air from the bleed exhaust device 200. In the illustrated example of FIG. 7A, the outlet flow vectors 704 form angles 706 with a device centerline 708. In the illustrated example of FIG. 7A, the angles 706 are approximately 20 degrees. In other examples, the angles 706 can have any other suitable value between 0 degrees and 45 degrees. Generally, the closer the angles 706 are to zero degrees, the less negative acoustic effects are associated with the mixing of the operability bleed air with the air flowing through the bypass airflow passage 148. Accordingly, the bleed exhaust device 200 has a reduced acoustic impact when compared to prior operability bleed systems that exhaust operability bleed air into the bypass orthogonally (e.g., perpendicular, at a right angle, 90 degrees, etc.) and/or near orthogonally.

In some examples, the outer walls 402, 404 can be dimensioned to facilitate the expelling of operability bleed air from the interior chamber 506 at the outlet flow vectors 704. That is, in some examples, the outer walls 402, 404 can have a thickness such that the body holes 512, 514 have a length sufficient to reduce the velocity of operability bleed air in directions other than the outlet flow vectors 704 (e.g., the tangential velocity of the operability bleed air, etc.). In the illustrated example of FIG. 7A, the outlet flow vectors 704 are depicted as forming the angles 706 relative to the device centerline 708 for each of the body holes 512, 514. In some examples, the device centerline 708 is parallel to the engine centerline (e.g., the centerline 112 of FIG. 1, etc.). In other examples, depending on the geometry of the interior chamber 506, the profile of the outer walls 402, 404, and/or the geometry of the body holes 512, 514, some or all of the outlet flow vectors 704 and resulting ones of the angles 706 can be different from other ones of the outlet flow vectors 704 and angles 706.

FIG. 8 is a perspective view of an example bleed exhaust device 800. The example bleed exhaust device 800 of FIG. 8 is similar to the bleed exhaust device 200 of FIGS. 2-7B, except that the bleed exhaust device 800 includes a first flange 802, a second flange 804, and mounting holes 806. In the illustrated example of FIG. 8, the bleed exhaust device 800 includes the outer walls 402, 404 of FIG. 4, from which the flanges 802, 804 extend, respectively. To couple the bleed exhaust device 800 to a bifurcation of a gas turbine engine (e.g., a bifurcation 204 of FIG. 2, etc.), the exhaust device 800 can be positioned with an opening of a bifurcation such that the flanges extend over the walls of the bifurcation (e.g., the bifurcation walls 408, 410, etc.). In some such examples, one or more fasteners (e.g., bolts, screws, rivets, etc.) can be inserted into the mounting holes 806 of the flanges 802, 804 and received by corresponding holes in the bifurcation. In some examples, a seal can be disposed between the flanges 802, 804 and the bifurcation walls. In some examples, the mountings holes 806 are absent. In some such examples, the bleed exhaust device 800 can be coupled (e.g., bonded, etc.) to the bifurcation via one or more welds and/or one or more interference fits. In some examples, one or both of the flanges 802, 804 are absent.

FIG. 9 is a perspective simplified view of the gas turbine engine 110 of FIG. 1 including another example bifurcation 902 and another example bleed exhaust device 904 implemented in accordance with teachings of this disclosure. The example bifurcation 902 is similar to the bifurcation 204 of FIG. 2, except that the bifurcation 902 includes the bleed exhaust device 904. The bleed exhaust device 904 can be coupled to an end of a bleed air conduit (e.g., the first end 306 of the bleed flow conduit 304 of FIG. 3, etc.) of an operability bleed system, such as the operability bleed system 300 of FIG. 3. In the illustrated example of FIG. 9, the bleed exhaust device 904 is disposed within a trailing edge 906 of the bifurcation 902.

The bleed exhaust device 904 receives operability bleed air from the gas turbine engine 110 and directs (e.g., exhausts, expels, outputs, etc.) the operability bleed air into the bypass airflow passage 148 (FIGS. 1 and 2). After the operability bleed air is expelled from the bleed exhaust device 904, the operability bleed air mixes with the flow of air flowing through the bypass airflow passage 148 (e.g., the first portion 154 of the air of FIG. 1, etc.). The mixed flow including the air from the fan section 116 and the operability bleed air then exits the gas turbine engine 110 via the bypass airflow passage 148. The bleed exhaust device 904 extends along a smaller portion of the trailing edge 906 of the bifurcation 902 than the bleed exhaust device 200 of FIGS. 2-7B on the bifurcation 204 of FIG. 2. In the illustrated example of FIG. 9, the bleed exhaust device 904 extends along 30% of the trailing edge 906 of the bifurcation 902. In other examples, the bleed exhaust device 904 can have any other suitable length (e.g., 10% of the trailing edge 906, 50% of the trailing edge 906, etc.). The comparatively smaller size of the bleed exhaust device 904 (e.g., relative to the bleed exhaust device 200 of FIG. 2, etc.) reduces the comparative weight of the bleed exhaust device 904. In some examples, the bleed exhaust device 904 can be used in configurations of the gas turbine engine 110 where comparatively less operability bleed air is to be exhausted (e.g., when compared to the bleed exhaust device 200 of FIGS. 2-7B, etc.). The bleed exhaust device 904 is described below in additional detail in conjunction with FIG. 10.

FIG. 10 is a perspective view of the bleed exhaust device 904 of FIG. 9. In the illustrated example of FIG. 10, the bleed exhaust device 904 includes an inlet 1002, a transition portion 1004, an inlet manifold 1006, an interior wall 1008, and a body 1010 having an interior chamber 1012, a first outer wall 1014, and a second outer wall 1016. The inlet 1002, the inlet manifold 1006, the interior wall 1008, the body 1010, the interior chamber 1012, the first outer wall 1014, and the second outer wall 1016 are similar to the inlet 406 of FIG. 4, the inlet manifold 502 of FIG. 5, the body 504 of FIG. 5, the interior wall 509 of FIG. 5, the body 504 of FIG. 5, the interior chamber 506 of FIG. 5, the first outer wall 402 of FIG. 4, and the second outer wall 404 of FIG. 4, respectively, except as noted otherwise.

The bleed exhaust device 904 can be composed of any suitable lightweight material that is capable of withstanding the comparatively high temperature and pressure within the bypass airflow passage 148 and/or the operability bleed air. For example, the bleed exhaust device 904 can be composed of a metal (e.g., a nickel alloy, a titanium alloy, aluminum, an aluminum alloy, aerospace-grade steel, etc.), a composite, and/or a high-strength plastic. In other examples, the bleed exhaust device 904 can be composed of any other suitable material (e.g., cast iron, steel, copper, plastic, etc.). In the illustrated example of FIG. 10, the bleed exhaust device 904 is a single integral component. In some such examples, the bleed exhaust device 904 can be manufactured via machining, casting, and/or additive manufacturing, etc.). In other examples, the bleed exhaust device 904 can be composed of multiple discrete components, which can be manufactured via any suitable manufacturing method(s).

In the illustrated example of FIG. 10, the inlet 1002 is disposed at a top of the inlet manifold 1006. In the illustrated example of FIG. 10, the inlet 1002 and the inlet manifold 1006 are radially aligned (e.g., parallel to the radial axis, etc.). The transition portion 1004 couples (e.g., mechanically couples, fluidly couples, etc.) the inlet 1002 to the inlet manifold 1006. In the illustrated example of FIG. 10, the transition portion 1004 is generally nozzle shaped, such that the flow path of the operability bleed air entering the bleed exhaust device 904 via the inlet 1002 expands. In other examples, the inlet 1002 can be disposed at an angle relative to the inlet manifold 1006. In some such examples, the transition portion 1004 can be curved to facilitate the coupling of the inlet 1002 to the inlet manifold 1006. In other examples, the inlet 1002 can be disposed at any other suitable location of the inlet manifold 1006. In the illustrated example of FIG. 10, the inlet manifold 1006 is cylindrically shaped. In some examples, the inlet manifold 1006 can have any other suitable shape (e.g., cylindrical, prism-shaped, conical, etc.), which can be determined empirically, analytically, and/or via modeling to increase the acoustic quieting/dampening associated with the inlet manifold 1006 and/or based on the location of the inlet 1002 relative to the inlet manifold 1006.

In the illustrated example of FIG. 10, the interior wall 1008 divides the inlet manifold 1006 and the interior chamber 1012. The interior wall 1008 includes manifold holes (not illustrated) that enable the flow of operability bleed air from the inlet manifold 1006 into the interior chamber 1012. For example, the interior wall 1008 can include holes similar to manifold holes 510 of FIG. 5 (e.g., primary exhaust holes, etc.).

In the illustrated example of FIG. 10, the body 1010 of the bleed exhaust device 904 includes the outer walls 1014, 1016. In some examples, like the outer walls 402, 404 of the bleed exhaust device 200 of FIG. 4, can be flush with the adjacent walls of the bifurcation 902. In the illustrated example of FIG. 10, the outer walls 1014, 1016 converge to a trailing edge 1018. In some examples, the trailing edge 1018 of the bleed exhaust device 904 can be axially aligned with the trailing edge 906 of FIG. 9 of the bifurcation 902. In other examples, the trailing edge 1018 can be downstream of the trailing edge 906 or upstream of the trailing edge 906.

The interior chamber 1012 is a cavity (e.g., a hole, an empty space, a hollow volume, etc.) formed within the body 1010. In the illustrated example of FIG. 10, the interior chamber 1012 is defined by the interior wall 1008, the outer walls 1014, 1016, and the top and bottom surfaces of the body 1010 and has a shape that corresponds thereto. In the illustrated example of FIG. 10, the interior chamber 1012 has a shape similar to the interior chamber 506 of FIG. 5 (e.g., a generally triangular prism, etc.). In other examples, the interior chamber 1012 can have any other suitable shape and/or size. The outer walls 1014, 1016 can include holes (not illustrated) similar to the body holes 512, 514 of FIG. 5, respectively, which extend through the outer walls 1014, 1016 into the interior chamber 1012. The body holes of the outer walls 1014, 1016 fluidly couple the exterior of the bleed exhaust device 904 (e.g., the bypass airflow passage 148 of FIGS. 1 and 2, etc.) to the interior chamber 1012. In some such examples, the body holes of the outer walls 1014, 1016 are secondary exhaust holes. In other examples, one of the outer walls 1014, 1016 does not include body holes. In some such examples, operability bleed air can leave the bleed exhaust device 904 via the present ones of the holes in the outer walls 1014, 1016.

During operation, operability bleed air enters the bleed exhaust device 904 via the inlet 1002. After entering the inlet 1002, the operability bleed air enters the inlet manifold 1006 and subsequently flows into the interior chamber 1012. After entering the interior chamber 1012, the operability bleed air is distributed throughout the interior chamber 1012 via the back pressure of the gas turbine engine 110 and out of the interior chamber 1012 via the body holes (not illustrated) and mixes with the air flowing through the bypass airflow passage 148. Like the bleed exhaust device 200 of FIGS. 2-7B, the flow of air through the bleed exhaust device 904 acoustically quiets (e.g., muffles, etc.) the sound pressure associated with the flow of the operability bleed air. For example, the loudness of the operability bleed air can be quieted (e.g., muffled, dampened, etc.) via absorptive silencing into the structure of the bleed exhaust device 904, via resistive silencing associated with the resistance (e.g., the impedance, etc.) associated with the holes of the bleed exhaust device 904, and/or shell damping via the inlet manifold 1006 and the interior chamber 1012. In some such examples, the bleed exhaust device 904 is a muffler (e.g., a muffling device, etc.).

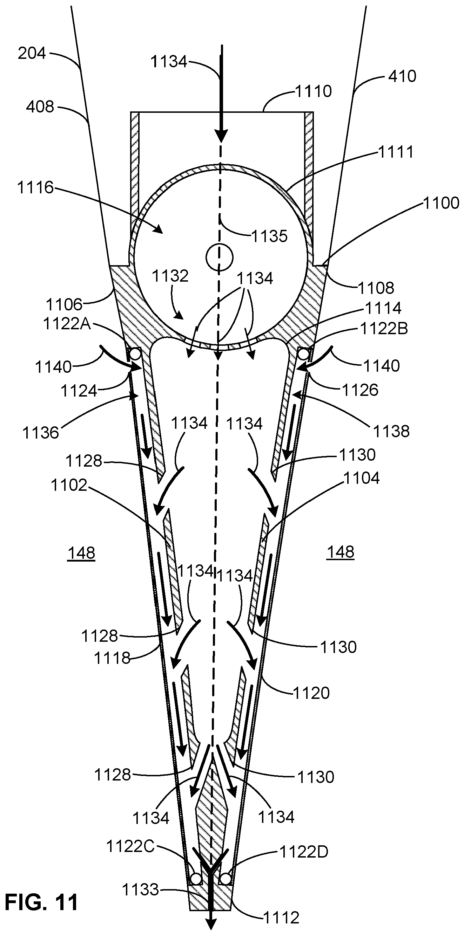

FIG. 11 is a top cross-sectional perspective view of another example bleed exhaust device 1100 disposed in the bifurcation 204 of FIG. 2 and implemented in accordance with teachings of this disclosure. The example bleed exhaust device 1100 is similar to the bleed exhaust device 200 of FIGS. 2-7B, except as noted otherwise. In the illustrated example of FIG. 11, the bleed exhaust device 1100 includes a first inner wall 1102, a second inner wall 1104, a first outer wall 1106, a second outer wall 1108, an inlet 1110, an inlet manifold 1111, and a trailing edge 1112. In the illustrated example of FIG. 11, the bleed exhaust device 1100 includes an interior chamber 1114 and a manifold chamber 1116.

In the illustrated example of FIG. 11, the bleed exhaust device 1100 includes a first shroud 1118, a second shroud 1120, a first seal 1122A, a second seal 1122B, a third seal 1122C, and a fourth seal 1122D. In the illustrated example of FIG. 11, the shrouds 1118, 1120 include a first shroud inlet hole 1124 and a second shroud inlet hole 1126. In the illustrated example of FIG. 11, the inner walls 1102, 1104 include first body holes 1128 and second body holes 1130. In the illustrated example of FIG. 11, manifold holes 1132 fluidly couple the manifold chamber 1116 and the interior chamber 1114. In the illustrated example of FIG. 11, the bleed exhaust device 1100 includes an outlet 1133.

In the illustrated example of FIG. 11, the outer walls 1106, 1108 are substantially flush with the bifurcation walls 408, 410 of FIG. 4, respectively. In the illustrated example of FIG. 11, the inner walls 1102, 1104 are substantially parallel to and offset radially inward from the outer walls 1106, 1108, respectively. That is, the inner walls 1102, 1104 are displaced radially inward toward an engine centerline 1135 relative to the outer walls 1106, 1108, respectively. In the illustrated example of FIG. 11, the first shroud 1118 and the second shroud 1120 are substantially flush with the outer walls 1106, 1108, respectively, and the bifurcation walls 408, 410, respectively. In the illustrated example of FIG. 11, the shrouds 1118, 1120 are parallel to outer walls 1106, 1108, respectively, and the bifurcation walls 408, 410, respectively. In some examples, the shrouds 1118, 1120 can be composed of a same material as the bleed exhaust device 1100, a same material as the bifurcation 204, and/or any other suitable material (e.g., a metal, a plastic, etc.). In some examples, the shrouds 1118, 1120 can include an acoustic treatment and/or an acoustic lining. For example, one or both of the shrouds 1118, 1120 can include one or more panels that include internal partitions to damp noise associated with the flow of operability bleed air 1134. In some such examples, the shrouds 1118, 1120 can include one or more internal cavities to damp noise/vibration via Helmholtz resonance.

Like the bleed exhaust device 200 of FIGS. 2-7B, the bleed exhaust device 1100 can be coupled to a bifurcation of a gas turbine engine (e.g., the bifurcation 204 of the gas turbine engine 110 of FIG. 2, etc.). During operation, example operability bleed air 1134 enters the inlet manifold 1111 of the bleed exhaust device 1100 via the inlet 1110. The upstream pressure of the inlet 1110 (e.g., pressure from a compressor of a gas turbine engine, etc.) causes the example operability bleed air 1134 to be distributed through the manifold chamber 1116. The inlet 1110, the inlet manifold 1111, and the manifold chamber 1116 are similar to the inlet 406 of FIG. 4, the inlet manifold 502, and the manifold chamber 508 of FIG. 5, respectively, except as noted and illustrated otherwise. After entering the inlet manifold 1111, the operability bleed air 1134 subsequently flows into the interior chamber 1114 from the manifold chamber 1116 via the manifold holes 1132. After entering the interior chamber 1114, the operability bleed air 1134 is distributed throughout the interior chamber 1114 via the back pressure of the inlet 1110 and out of the interior chamber 1114 via the body holes 1128, 1130 of the inner walls 1102, 1104, respectively. Like the bleed exhaust device 200 of FIGS. 2-7B, the flow of the operability bleed air 1134 through the bleed exhaust device 1100 acoustically quiets (e.g., muffles, etc.) the sound pressure associated with the flow of the operability bleed air. For example, the loudness of the operability bleed air 1134 can be quieted (e.g., muffled, dampened, etc.) via absorptive silencing into the structure of the bleed exhaust device 1100, via resistive silencing associated with the flow resistance (e.g., the impedance, etc.) associated with the flow of the operability bleed air 1134 through the holes 1128, 1130, 1132 of the bleed exhaust device 1100, and/or shell damping via the interior chamber 1114 and the manifold chamber 1116. In some such examples, the bleed exhaust device 1100 is a muffler (e.g., a muffling device, etc.).

Unlike the bleed exhaust device 200 of FIGS. 2-7B and the bleed exhaust device 904 of FIGS. 9 and 10, the operability bleed air 1134 exiting the body holes 1128, 1130 is not mixed directly with the air flowing through the bypass airflow passage 148. In the illustrated example of FIG. 11, the operability bleed air 1134 exiting the interior chamber 1114 via the first body holes 1128 and the second body holes 1130 enters a first channel 1136 and a second channel 1138. In the illustrated example of FIG. 11, the first channel 1136 is defined between the first shroud 1118 and the first inner wall 1102, and the second channel 1138 is defined between the second shroud 1120 and the second inner wall 1104. In the illustrated example of FIG. 11, a bypass flow 1140 enters the channels 1136, 1138 via the holes 1124, 1126, respectively. That is, the holes 1124, 1126 fluidly couple the bypass airflow passage 148 to the channels 1136, 1138, respectively.

The seals 1122A, 1122B, 1122C, 1122D couple the shrouds 1118, 1120 to the inner walls 1102, 1104. The seals 1122A, 1122B, 1122C, 1122D prevent the flow of air from the channels 1136, 1138 into the bypass airflow passage 148 at the joints of the shrouds 1118, 1120 and the inner walls 1102, 1104 and/or the outer walls 1106, 1108. In some examples, the seals 1122A, 1122B, 1122C, 1122D are elastomer pucks. In other examples, the seals 1122A, 1122B, 1122C, 1122D can be implemented by any other suitable type of seal (e.g., a sealing foam, an O-ring, etc.). In other examples, the seals 1122A, 1122B, 1122C, 1122D are absent.

The channels 1136, 1138 direct the flow of the bypass flow 1140 over the inner walls 1102, 1104. Within the channels 1136, 1138, the bypass flow 1140 mixes with the operability bleed air 1134 and exits the bleed exhaust device 1100 via the outlet 1133 at the trailing edge 1112. In the illustrated example of FIG. 11, the outlet 1133 is formed in the trailing edge 1112 of the bleed exhaust device 1100 (e.g., the outlet 1133 is at the intersection of the first inner wall 1102 and the second inner wall 1104, etc.). In some examples, the outlet 1133 can be absent. In some such examples, the shrouds 1118, 1120 can include one or more holes adjacent to the trailing edge 1112 to enable air to exit the channels 1136, 1138.

The mixing of the bypass flow 1140 and the operability bleed air 1134 within the channels 1136, 1138 cools the operability bleed air 1134 prior to the operability bleed air 1134 leaving the bleed exhaust device 1100. The cooling of the operability bleed air 1134 prior to exhausting the operability bleed air 1134 into the bypass airflow passage 148, reduces the aerodynamic losses of the fan from cool air mixing. In some examples, the mixing of the operability bleed air 1134 and the bypass airflow passage 148 prior to exiting the bleed exhaust device 1100 reduces the noise effects associated with the exhausting of the operability bleed air 1134 from the bleed exhaust device 1100. In the illustrated example of FIG. 11, the air exhausted from the bleed exhaust device 1100 (e.g., the mixture of the bypass flow 1140 and the operability bleed air 1134, etc.) has an exit vector parallel to the engine centerline 1135, which also reduces the noise associated with the exhausting of the operability bleed air 1134. Additionally, the flow of the bypass flow 1140 over the inner walls 1102, 1104 cools the bleed exhaust device 1100, which reduces thermal stress on the bleed exhaust device 1100.

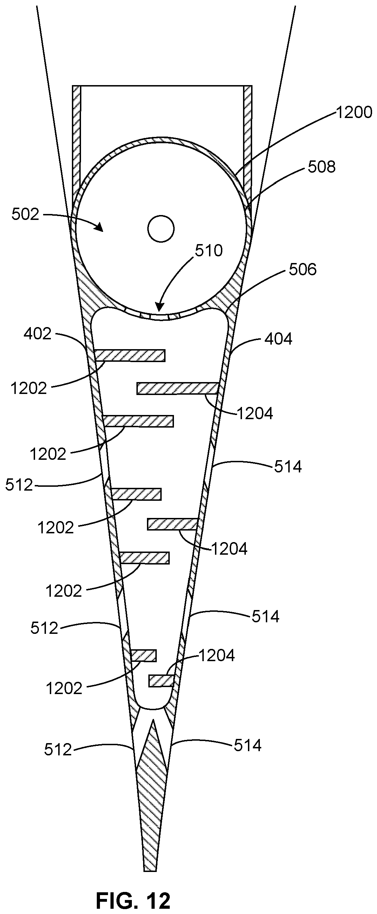

FIG. 12 is a top cross-sectional perspective view of another example bleed exhaust device 1200 implemented in accordance with teachings of this disclosure. The bleed exhaust device 1200 is similar to the bleed exhaust device 200 of FIGS. 2-7B, except as noted otherwise. Like the bleed exhaust device 200 of FIGS. 2-7B, the bleed exhaust device 1100 can be coupled to a bifurcation of a gas turbine engine (e.g., the bifurcation 204 the gas turbine engine 110 of FIG. 2, etc.). In the illustrated example of FIG. 12, the bleed exhaust device 1200 includes the first outer wall 402 of FIG. 4A, the second outer wall 404 of FIG. 4A, the interior chamber 506 of FIG. 5, the first body holes 512 of FIG. 5, and the second body holes 514 of FIG. 5. In the illustrated example of FIG. 12, the bleed exhaust device 1200 includes first baffles 1202 that extend into the interior chamber 506 from the first outer wall 402 and second baffles 1204 that extend into the interior chamber 506 from the second outer wall 404.

The baffles 1202, 1204 (e.g., vanes, panels, etc.) obstruct and guide the flow of operability bleed air through the interior chamber 506. That is, the baffles 1202, 1204 are disposed between the manifold holes 510 (e.g., an inlet of the interior chamber 506, etc.) and the body holes 512, 514 (e.g., an outlet of the interior chamber 506, etc.). The baffles 1202, 1204 further dissipate the energy of the operability bleed air flowing through the bleed exhaust device 1200, which reduces the acoustic effect (e.g., noise, vibration, etc.) of venting the operability bleed air into the bypass airflow passage 148 (FIGS. 1 and 2). In some examples, the baffles 1202, 1204 increase the transfer of heat from the operability bleed air to the bleed exhaust device 1200, which reduces the temperature of the operability bleed air prior to exiting the bleed exhaust device 1200 via the body holes 512, 514.

While one example configuration of the baffles 1202, 1204 is depicted in FIG. 12, in other examples, the baffles 1202, 1204 can be in any other suitable configuration. For example, the baffles 1202, 1204 can be hollow tubes that include one or more perforations. In some examples, the baffles 1202, 1204 can include one or more ridges, one or more grooves, and/or one or more other surface features. Additionally or alternatively, the bleed exhaust device 1200 can include the channels and shrouds of the bleed exhaust device 1100 (e.g., the baffles 1202, 1204 can be incorporated into the bleed exhaust device 1100 of FIG. 11, etc.). In some examples, the baffles 1202, 1204 can include an acoustic treatment and/or an acoustic lining. For example, one or both of the baffles 1202, 1204 can include one or more panels that include internal partitions to damp noise associated with the flow of the operability bleed air 1134. In some such examples, the baffles 1202, 1204 can include one or more internal cavities to damp noise/vibration via Helmholtz resonance. In some examples, the bleed exhaust device 1200 can include baffles in the manifold chamber 508.

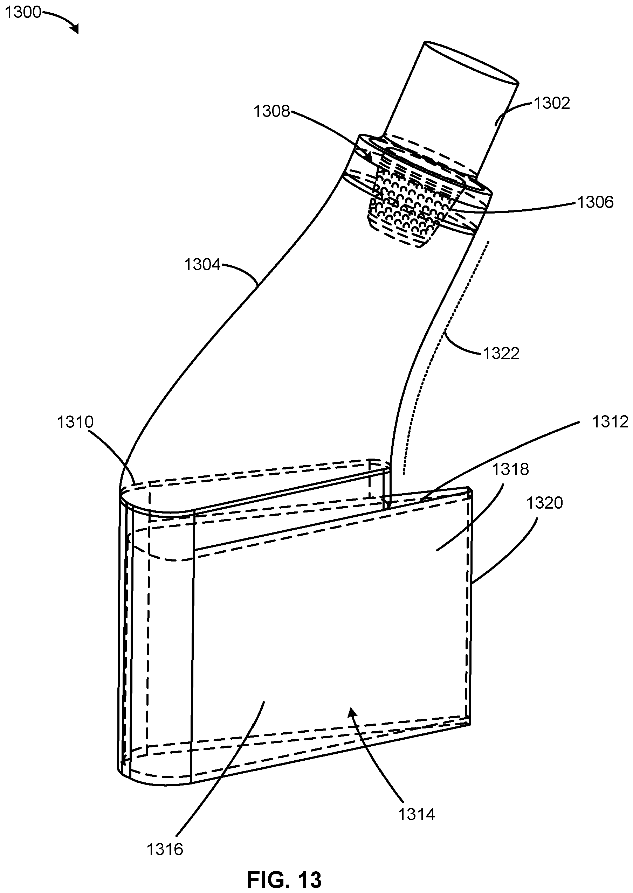

FIG. 13 is a perspective view of another example bleed exhaust device 1300 implemented in accordance with teachings of this disclosure. The bleed exhaust device 1300 is similar to the bleed exhaust device 904 of FIGS. 9 and 10, except as noted otherwise. In some examples, the bleed exhaust device 1300 can be incorporated into the bifurcation of a gas turbine engine (e.g., the bifurcation 204 of FIG. 2, etc.). In the illustrated example of FIG. 13, the bleed exhaust device 1300 includes an inlet 1302 and a transition portion 1304. In the illustrated example of FIG. 13, an inlet damper 1306 is disposed between the inlet 1302 and the transition portion 1304. In the illustrated example of FIG. 13, the inlet damper 1306 includes a screen 1308. In the illustrated example of FIG. 13, the bleed exhaust device 1300 further includes a junction 1310 and a body 1312. In the illustrated example of FIG. 13, the body 1312 includes an interior chamber 1314, a first outer wall 1316, a second outer wall 1318, and a trailing edge 1320.

The inlet damper 1306, also referred to herein as a "pepper pot damper," is a flow damper disposed adjacent to the inlet 1302. In the illustrated example of FIG. 13, the screen 1308 of the inlet damper 1306 is generally frustoconically shaped (e.g., thimble-shaped, etc.) and includes a plurality of openings (e.g., perforations, etc.). In other examples, the screen 1308 can have any other suitable shape (e.g., hemispherical, conical, cylindrical, etc.). In some examples, the inlet damper 1306 can include an additional perforated wall disposed downstream of the screen 1308. In the illustrated example of FIG. 13, air flowing through the inlet damper 1306 is damped (e.g., muffled, etc.) via the vibration of the screen 1308 and the impedance of the openings of the screen 1308. In some examples, the inlet damper 1306 can be absent.

The transition portion 1304 is disposed between the inlet 1302 and the body 1312. In some examples, the transition portion 1304 is an inlet manifold. In the illustrated example of FIG. 13, the transition portion 1304 has a curvature 1322. In the illustrated example of FIG. 13, the curvature 1322 causes the inlet 1302 to be displaced toward the trailing edge 1320. In other examples, the curvature 1322 can cause the inlet 1302 to be displaced away from the trailing edge 1320 and the body 1312. In other examples, the transition portion 1304 does not include the curvature 1322. In some such examples, the inlet 1302 and/or the inlet damper 1306 can be disposed above the junction 1310. In the illustrated example of FIG. 13, the inlet 1302 is disposed at top of the transition portion 1304. In the illustrated example of FIG. 13, the flow area of the transition portion 1304 increases between the inlet 1302 and the junction 1310 (e.g., the flow area of the transition portion 1304 expands in the direction of flow of the operability bleed air through the bleed exhaust device 1300, etc.). In other examples, the flow area of the transition portion 1304 can be constant along the length of the transition portion 1304 (e.g., similar to the inlet manifold 1006 of FIG. 10, etc.). In some examples, the curvature 1322 and expansion of the transition portion 1304 can facilitate the packaging of the bleed exhaust device 1300 within a bifurcation of a gas turbine engine. In some examples, the transition portion 1304 can include one or more baffles (e.g., similar to the baffles 1202, 1204 of FIG. 12, etc.) and/or other structures to damp/muffle the operability bleed air flowing therethrough.

The junction 1310 is disposed between the transition portion 1304 and the body 1312. In the illustrated example of FIG. 13, the junction 1310 is open (e.g., the interior of the transition portion 1304 is continuous with the interior chamber 1314, etc.). In other examples, the junction 1310 can include an internal wall (e.g., similar to the interior wall 509 of FIG. 5, etc.) with corresponding openings (e.g., holes, slots, etc.) to damp/muffle the flow of operability bleed air flowing through the transition portion 1304 into the interior chamber 1314 of the body 1312.

Like the bleed exhaust device 200 of FIGS. 2-7B and the bleed exhaust device 904 of FIGS. 9 and 10, the bleed exhaust device 1300 can be disposed within the trailing edge of a bypass bifurcation, such that the trailing edge 1320 of the bleed exhaust device 1300 is aligned with the trailing edge of the bifurcation. In other examples, the trailing edge 1320 can be spaced from the trailing edge of the bifurcation (e.g., spaced upstream, spaced downstream, etc.). During operation, operability bleed air enters the bleed exhaust device 1300 via the inlet 1302. After entering the inlet 1302, the operability bleed air flows through the screen 1308 of the inlet damper 1306 and then subsequently into the transition portion 1304. From the transition portion 1304, the operability bleed air flows through the junction 1310 into the interior chamber 1314. After entering the interior chamber 1314, the operability bleed air is distributed throughout the interior chamber 1314 via the back pressure of the gas turbine engine 110 and out of the interior chamber 1314 via the body holes (not illustrated) and into the ambient air (e.g., the air flowing through the bypass airflow passage 148 of FIGS. 1 and 2, etc.). For example, the bleed exhaust device 1300 can direct (e.g., exhaust, expel, output, etc.) received operability bleed air into a bypass airflow passage of the gas turbine engine (e.g., the bypass airflow passage 148 of FIGS. 1 and 2, etc.). In some such examples, the bleed air exhausted by the bleed exhaust device 1300 is mixed with the flow flowing through the bypass airflow passage 148 (e.g., the first portion 154 of the air 150 of FIG. 1, etc.) and exits the gas turbine engine.

Like the bleed exhaust device 200 of FIGS. 2-7B and the bleed exhaust device 904 of FIGS. 9 and 10, the flow of air through the bleed exhaust device 1300 acoustically quiets (e.g., muffles, etc.) the sound pressure associated with the flow of the operability bleed air. For example, the loudness of the operability bleed air can be quieted (e.g., muffled, dampened, etc.) via absorptive silencing into the structure of the bleed exhaust device 1300, via the vibration of the inlet damper 1306, via resistive silencing associated with the resistance (e.g., the impedance, etc.) associated with the holes of the inlet damper 1306 and/or the outer walls 1316, 1318, and/or shell damping via the transition portion 1304 and the interior chamber 1314 . In some such examples, the bleed exhaust device 1300 is a muffler (e.g., a muffling device, etc.). In some examples, the interior chamber 1314 can include baffles (e.g., baffles similar to the baffles 1202, 1204 of FIG. 12, etc.) and/or other structures with acoustic treatment and/or an acoustic lining to damp and/or quiet the flow operability bleed air through the bleed exhaust device 1300. In some examples, the bleed exhaust device 1300 includes shrouds (e.g., the shrouds 1118, 1120 of FIG. 11, etc.) coupled to one or both of the outer walls 1316, 1318 to channel bypass airflow passage thereover and cool the bleed exhaust device 1300 during operation.

Like the bleed exhaust device 904 of FIGS. 9 and 10, the trailing edge 1320 of the bleed exhaust device 1300 is shorter than the device trailing edge 407 of the bleed exhaust device 200 such that the bleed exhaust device 1300 (e.g., the bleed exhaust device 1300 extends along a smaller portion of the trailing edge of the bifurcation of than the bleed exhaust device 200 of FIGS. 2-7B, etc.). For example, the trailing edge 1320 can be dimensioned to be 30% of the length of the bifurcation in which the bleed exhaust device 1300 is installed. In other examples, the trailing edge 1320 can be any other suitable length (e.g., 10% of the length of the bifurcation trailing edge, 50% of the bifurcation trailing edge, 100% of the bifurcation of the trailing edge, etc.). In some examples, the absence of an inlet manifold (e.g., the inlet manifold 502 of FIGS. 5 and 12, etc.), the inlet damper 1306, and the curvature of the transition portion 1304 reduces the comparative weight and the comparative packaging space (e.g., the volume, etc.) of the bleed exhaust device 1300.

The bleed exhaust device 1300 can be composed of any suitable lightweight material that is capable of withstanding the comparatively high temperature and pressure within a bypass airflow passage (e.g., the bypass airflow passage 148, etc.) and/or of temperature the operability bleed air. For example, the bleed exhaust device 1300 can be composed of a metal (e.g., a nickel alloy, a titanium alloy, aluminum, an aluminum alloy, aerospace-grade steel, etc.), a composite, and/or a high-strength plastic. In other examples, the bleed exhaust device 1300 can be composed of any other suitable material (e.g., cast iron, steel, copper, plastic, etc.). In the illustrated example of FIG. 10, the bleed exhaust device 904 is a single integral component. In some such examples, the bleed exhaust device 1300 can be manufactured via machining, casting, and/or additive manufacturing, etc.). In other examples, the bleed exhaust device 1300 can be composed of multiple discrete components, which can be manufactured via any suitable manufacturing method(s). For example, the inlet damper 1306 and/or the inlet 1302 can be manufactured separately (e.g., via stamping, via sheet forming manufacturing processes, etc.) and coupled to the transition portion 1304.

From the foregoing, it will be appreciated that example systems, apparatus, articles of manufacture, and methods have been disclosed for exhaust devices disposed in the trailing edges of engine bifurcations that discharge operability bleed air into the bypass airflow passage of a gas turbine engine. Example exhaust devices disclosed herein discharge operability at an acute angle relative to the air flowing through the bypass airflow passage, which reduces negative acoustic effects when compared to prior operability bleed systems. Example operability bleed systems disclosed herein do not extend through engine casing elements, which reduces the weight of such engine casing elements and the overall gas turbine engine. Unlike some prior operability bleed devices, the example exhaust devices disclosed herein are incorporated into a structural component of gas turbine engines, which enables the retrofitting of example exhaust devices disclosed herein into prior gas turbine engines. Similarly, because operability bleeds are not used on all gas turbine engines and the necessity of such operability bleeds cannot be determined until physical engine testing is conducted, the exhaust devices disclosed herein can be removed and replaced with a prior bifurcation structure if an operability bleed is found to be unnecessary for the gas turbine engine.

Further examples and example combinations thereof are provided by the subject matter of the following clauses:
An apparatus for a gas turbine engine, the apparatus comprising an exhaust device coupled to a bifurcation of a gas turbine engine, the bifurcation disposed in a bypass airflow passage of the gas turbine engine, and a bleed flow conduit including a first end coupled to a compressor bleed of the gas turbine engine, and a second end coupled to the exhaust device.

The apparatus of any preceding clause, further including a valve coupled to the bleed flow conduit, the valve to regulate a flow of bleed air through the bleed flow conduit.

The apparatus of any preceding clause, wherein the exhaust device is disposed adjacent to a trailing edge of the bifurcation.

The apparatus of any preceding clause, wherein the exhaust device includes a device trailing edge, and the device trailing edge is downstream of the trailing edge of the bifurcation.

The apparatus of any preceding clause, wherein the exhaust device extends along approximately 75% of the trailing edge of the bifurcation.

The apparatus of any preceding clause, wherein the exhaust device extends along approximately 30% of the trailing edge of the bifurcation.

The apparatus of any preceding clause, wherein the bifurcation includes a bifurcation wall, the exhaust device including an outer wall, and the bifurcation wall and the outer wall are flush.

The apparatus of any preceding clause, wherein the exhaust device includes a first chamber coupled to the second end, a second chamber coupled to the first chamber via a plurality of holes, and an outlet hole fluidly coupling the second chamber and the bypass airflow passage.

The apparatus of any preceding clause, wherein the exhaust device includes a baffle extending from the outer wall into the second chamber.

The apparatus of any preceding clause, wherein the exhaust device includes a strut disposed within the second chamber.

The apparatus of any preceding clause, wherein the exhaust device includes a plurality of struts including the first strut.

The apparatus of any preceding clause, wherein the plurality of struts is arranged in three columns.

The apparatus of any preceding clause, wherein the outlet hole defines an outlet flow vector, the outlet flow vector forming an acute angle with a centerline of the engine.

The apparatus of any preceding clause, further including a flange extending from the outer wall, the flange coupled to the outer wall.

The apparatus of any preceding clause, the flange includes a plurality of holes to receive a corresponding plurality of fasteners to couple the exhaust device to the gas turbine engine.

The apparatus of any preceding clause, wherein the bifurcation includes a bifurcation wall, and the apparatus further includes a shroud substantially flush with the bifurcation wall, the shroud defining a channel between the shroud and an outer wall of the exhaust device, and the shroud including an opening fluidly coupling the bypass airflow passage and the channel.

The apparatus of any preceding clause, wherein the exhaust device further includes an inlet coupled to the second end, an inlet manifold fluidly coupled to the inlet.

The apparatus of any preceding clause, wherein the inlet is disposed at a center of the inlet manifold.

The apparatus of any preceding clause, wherein the inlet is disposed at a top of the inlet manifold.

The apparatus of any preceding clause, wherein the inlet manifold includes a top surface and a bottom surface, the top surface and the bottom having a domed shape.

The apparatus of any preceding clause, further including a transition portion disposed between the inlet and the inlet manifold.

An apparatus to be coupled to a bifurcation disposed in a bypass airflow passage of a gas turbine engine, the apparatus comprising an inlet, an inlet manifold fluidly coupled to the inlet, a first wall including a hole, and a second wall, the first wall and the second wall defining a chamber therebetween, the chamber fluidly coupled to the inlet manifold, the chamber fluidly coupled to the bypass airflow passage via the hole.

The apparatus of any preceding clause, wherein the hole is a first hole, the second wall includes a second hole, the chamber fluidly coupled to the bypass airflow passage via the second hole.

The apparatus of any preceding clause, wherein the first wall and the second wall converge to a trailing edge.

The apparatus of any preceding clause, wherein the trailing edge is a first trailing edge, and the device trailing edge is aligned with a second trailing edge of the bifurcation.

The apparatus of any preceding clause, wherein the first wall is to be flush with a bifurcation wall of the bifurcation.

The apparatus of any preceding clause, wherein the inlet is disposed at a center of the inlet manifold.

The apparatus of any preceding clause, wherein the hole is a first hole and further including an interior wall disposed between the inlet manifold and the chamber, the interior wall includes a second hole that fluidly couples the inlet manifold and the chamber.

The apparatus of any preceding clause, wherein the inlet has an axial centerline and the hole is configured to expel air at an acute angle relative to the axial centerline.

The apparatus of any preceding clause, wherein the chamber includes a plurality of vanes extending from the first wall.

The apparatus of any preceding clause, further including a shroud coupled to the first wall, the coupling of the first wall and the shroud defining a channel therebetween, the channel to direct bypass air over the first wall, and a seal disposed between the shroud and the first wall.

The apparatus of any preceding clause, wherein the channel is in fluid communication within the chamber.

The apparatus of any preceding clause, wherein the shroud is a first shroud and the channel is a first channel, further including a second shroud coupled to the second wall, the coupling of the second wall and the shroud defining a second channel therebetween, the second channel to direct bypass air over the second wall.

The apparatus of any preceding clause, wherein the channel includes an outlet disposed at a traveling edge.

The apparatus of any preceding clause, wherein the shroud is flush with a bifurcation wall of the bifurcation.

The apparatus of any preceding clause, wherein the shroud is parallel to the outer wall.

The apparatus of any preceding clause, wherein the inlet is disposed at a top of the inlet manifold.

The apparatus of any preceding clause, wherein the inlet manifold includes a top surface and a bottom surface, the top surface and the bottom having a domed shape.

The apparatus of any preceding clause, further including a transition portion disposed between the inlet and the inlet manifold.

The apparatus of any preceding clause, wherein the transition portion includes a curvature such that the inlet is disposed adjacent to the trailing edge.

The apparatus of any preceding clause, further including an inlet damper is upstream of the chamber.

The apparatus of any preceding clause, wherein the inlet damper is a pepper pot.

A gas turbine engine including the apparatus of any preceding clause.

A method including determining if a gas turbine engine has an engine condition that requires an operability bleed, and after determining the gas turbine engine requires an operability bleed disposing an exhaust device in a bifurcation of the gas turbine.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus (200, 800, 904, 1100, 1200, 1300) to be coupled to a bifurcation disposed in a bypass airflow passage (148) of a gas turbine engine (110), the apparatus (200, 800, 904, 1100, 1200, 1300) comprising:
an inlet (406, 1002, 1110);
an inlet manifold (502, 1006, 1111, 1304) fluidly coupled to the inlet (406, 1002, 1110);
a first wall (402, 1014, 1102, 1316) including a hole (512, 1128); and
a second wall (404, 1016, 1106, 1318), the first wall (402, 1014, 1102, 1316) and the second wall (404, 1016, 1106, 1318) defining a chamber (506, 1012, 1114, 1314) therebetween, the chamber (506, 1012, 1114, 1314) fluidly coupled to the inlet manifold (502, 1006, 1111, 1304), the chamber (506, 1012, 1114, 1314) fluidly coupled to the bypass airflow passage (148) via the hole (512, 1128).

2. The apparatus (200, 800, 904, 1100, 1200, 1300) of claim 1, wherein the hole (512, 1128) is a first hole (512, 1128), the second wall (404, 1016, 1106, 1318) includes a second hole (512, 1130), the chamber (506, 1012, 1114, 1314) fluidly coupled to the bypass airflow passage (148) via the second hole (512, 1130).

3. The apparatus (200, 800, 904, 1100, 1200, 1300) of claim 1 or 2, wherein the first wall (402, 1014, 1102, 1316) and the second wall (404, 1016, 1106, 1318) converge to a trailing edge (407, 1018, 1112, 1320).

4. The apparatus (200, 800, 904, 1100, 1200, 1300) of claim 3, wherein the trailing edge (407, 1018, 1112, 1320) is a first trailing edge (407, 1018, 1112, 1320), and the first trailing edge (407, 1018, 1112, 1320) is aligned with a second trailing edge (202, 906) of the bifurcation (204, 902).

5. The apparatus (200, 800, 904, 1100, 1200, 1300) of any preceding claim, wherein the first wall (402, 1014, 1102, 1316) is to be flush with a bifurcation wall (408) of the bifurcation (204, 902).

6. The apparatus (200, 800, 904, 1100, 1200, 1300) of any preceding claim, wherein the inlet (406, 1002, 1110) is disposed at a center of the inlet manifold (502, 1006, 1111, 1304).

7. The apparatus (200, 800, 904, 1100, 1200, 1300) of any preceding claim, wherein the hole (512, 1128) is a first hole (512, 1128) and further including an interior wall (509, 1008) disposed between the inlet manifold (502, 1006, 1111, 1304) and the chamber (506, 1012, 1114, 1314), the interior wall (509, 1008) includes a second hole (510) that fluidly couples the inlet manifold (502, 1006, 1111, 1304) and the chamber (506, 1012, 1114, 1314).

8. The apparatus (200) of any preceding claim, wherein the inlet (406) has an axial centerline (708) and the hole (512) is configured to expel air at an acute angle (706) relative to the axial centerline (708).

9. The apparatus (1300) of any preceding claim, wherein the inlet (1302) includes a pepper pot damper (1306).

10. The apparatus (200, 800, 904, 1100, 1200, 1300) of any preceding claim, further including:
a shroud (1118) coupled to the first wall (1102), the coupling of the first wall (1102) and the shroud (1118) defining a channel (1136) therebetween, the channel (1136) to direct bypass air over the first wall (1102); and
a seal (1122A, 1122B) disposed between the shroud (1118) and the first wall (1102).

11. The apparatus (1200) of any preceding claim, further including a baffle (1202) extending from the first wall (402) into the chamber (506).

12. An operability bleed system (300) including the apparatus (200, 800, 904, 1100, 1200, 1300) of any one of claims 1-11.

13. The operability bleed system (300) of claim 12, further including a bleed flow conduit (304) including:
a first end (306) coupled to a compressor bleed of the gas turbine engine (110); and
a second end (307) coupled to the apparatus (200, 800, 904, 1100, 1200, 1300).

14. The operability bleed system of claim 13, further including a valve (302) coupled to the bleed flow conduit (304), the valve (302) to regulate a flow of bleed air through the bleed flow conduit (304).

15. The gas turbine engine (110) including the apparatus (200, 800, 904, 1100, 1200, 1300) of any one of claims 1-11.
